**Europäisches Patentamt**

**European Patent Office**

**Office européen des brevets**

(11) Publication number: **0 387 947 B1**

# EUROPEAN PATENT SPECIFICATION

(45) Date of publication of patent specification: **28.09.94** (51) Int. Cl.⁵: **C08F 8/04**, C08F 297/00

(21) Application number: **90200547.9**

(22) Date of filing: **07.03.90**

(54) **Thermoplastic elastomeric block polymers.**

(30) Priority: **08.03.89 GB 8905255**

(43) Date of publication of application:
**19.09.90 Bulletin 90/38**

(45) Publication of the grant of the patent:
**28.09.94 Bulletin 94/39**

(84) Designated Contracting States:
**BE DE ES FR GB IT NL**

(56) References cited:
**EP-A- 0 279 766**
**GB-A- 1 157 497**
**US-A- 3 600 311**
**US-A- 3 670 054**
**US-A- 4 168 286**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **Van der Huizen, Adriaan Albert**
**Badhuisweg 3**
**NL-1031 CM Amsterdam (NL)**

**Description**

The invention relates to thermoplastic elastomeric block polymers, to their preparation and to their use. More in particular the invention relates to thermoplastic elastomeric triblock copolymers and star-shaped or radical block copolymers having semi-crystalline endblocks and elastomeric midblocks.

Thermoplastic elastomeric block copolymers are known compounds and are advantageously being used in many outlets such as in footwear and adhesives in view of their unique combination of thermoplastic and elastomeric performance aspects.

A well-established class of such block copolymers are the styrene-butadiene-styrene and styrene-isoprene-styrene triblock copolymers as well as their hydrogenated derivatives, which block copolymers are characterized by a two-phase system due to incompatibility of the two types of polymer blocks. Although the mechanical performance properties of these thermoplastic elastomers are greatly enhanced by an increased degree of said incompatibility, the latter simultaneously results in a high melt flow, which is disadvantageous for the processibility of said polymers.

A more recent development in the field of the thermoplastic elastomers are block copolymers of which the different polymeric blocks are claimed to be more or less compatible in the melt, but upon cooling, the endblocks thereof are capable of forming crystalline domains. A typical representative of this class of block copolymers is an all-conjugated diene triblock copolymer, such as a butadiene-isoprene-butadiene triblock copolymer, wherein the endblocks have a high 1,4-linkage content ($\geq$ 90%) and the elastomeric midblock has approximately 12% 3,4-linkage content. Such polymers can be conveniently prepared via an organolithium-initiated polymerization in solution. This method is also suitable for the preparation of the hereinbefore mentioned styrene-butadiene-styrene block copolymers. Complete hydrogenation of the all-conjugated diene based block copolymers results in block copolymers having crystallizable, polyethylene-type end blocks and an elastomeric midblock. Although the performance of these completely hydrogenated species was generally superior to that of the corresponding non-hydrogenated block copolymers, the degree of crystallinity obtainable in the endblocks was considerably lower compared to that of polyethylene. Although it was found that the performance properties of these semi-crystalline endblock containing polymers could be somewhat improved by increasing the overall molecular weight of these polymers, this increase in molecular weight had an adverse effect on the processibility of these products. In "Advances in Elastomers and Rubber Elasticity", Plenum Press, NY 1986, pp. 197-220, H.L. Hsieh and H.C. Yeh describe hydrogenated butadiene homopolymers as well as block polymers containing hydrogenated polybutadiene blocks, such as hydrogenated butadiene-isoprene-butadiene block copolymers, wherein the hydrogenated polybutadiene had a structure virtually identical to that of linear polyethylene. Although these polymers were a considerable improvement in view of the presence of polyethylene-type polymer blocks, this improvement was apparently only obtainable at the cost of the processibility of said polymers, as these polymers are not only characterized by a high molecular weight but especially by a very wide molecular weight distribution (i.e. $\overline{M}_w/\overline{M}_n$ = 7.2-9.1). This is considered to be a major disadvantage and these polymers thus will require conditions of high temperature and/or high shear during processing. This is not only undesirable from an economic point of view but may moreover lead to an unacceptable degree of polymer degradation.

Hence it will be appreciated that there is still a need for further improvement in the preparation of such hydrogenated block copolymers.

The problem underlying the present invention is developing thermoplastic elastomeric polymers which do not suffer from the poor processing characteristics as described hereinbefore and show the desired high performance characteristics.

As a result of continuing and extensive research and experimentation, there was surprisingly found that it is possible to prepare novel thermoplastic elastomeric block copolymers, having polyethylene-type crystalline endblocks as described hereinbefore and simultaneously having good processibility characteristics, i.e. requiring less stringent processing conditions, by preparation of selected olefinically unsaturated block copolymers and followed by a substantially complete hydrogenation thereof.

The invention provides therefore thermoplastic elastomeric block copolymers of general formula BDB' (I) or of general formula (B''E)$_n$X (II), wherein each of B, B' and B'' comprises a linear polyethylene block obtainable by hydrogenating at least 96% of the olefinic unsaturation initially present in a poly(1,3-butadiene)-block having a 1,2-linkage content of less than 5 mol%, said polyethylene block having a melting temperature $\geq$ 110 °C, as determined via differential scanning calorimetry; D and E are linear elastomeric blocks based on one ore more conjugated dienes having from 4 to 8 carbon atoms per molecule, obtainable by hydrogenating at least 96% of the olefinic unsaturation initially present in said elastomeric blocks; the molecular weight distribution ($\overline{M}_w/\overline{M}_n$) of B, BD, BDB', B'' and B''E is $\leq$ 2; X is a terminal coupling agent-based entity and n is an integer $\geq$ 2.

In the context of the present invention the term "linear" polymer block refers to a polymer block having a linear, i.e. a non-branched polymer backbone, which polymer backbone may carry relatively few low molecular weight side groups, such as $CH_3$-, $C_2H_5$-, $C_3H_5$-, $C_3H_7$-, $C_6H_5$- and $C_7H_7$-.

The block copolymers of general formula I can be considered to originate from block polymers which have been obtained via a full-sequential polymerization procedure, as a result of which the endblocks B and B' may be the same or different as regards molecular weight and/or configuration. The block copolymers of general formula II will be linear triblock copolymers for $n = 2$ and star-shaped or radial block copolymers for $n > 2$, wherein the number average molecular weight ($\overline{M}_n$) of different diblocks B''E will be the same for a given copolymer.

With the block copolymers of the present invention the $\overline{M}_n$ of the polymer blocks B, B' and B'' will be in range of from 5,000 to 250,000, the $\overline{M}_n$ of polymer block D will be in the range of from 25,000 to 750,000 and the $\overline{M}_n$ of block E will be in the range of from 10,000 to 400,000; and the endblocks comprise from 10 to 90% m of the corresponding block copolymer. Preferably the $\overline{M}_n$ of blocks B,B' and B'' will be in the range of from 10,000 to 100,000, that of block D will be in the range of from 40,000 to 500,000 and the $\overline{M}_n$ of block E will be in the range of from 20,000 to 250,000, while the endblocks comprise from 20 to 80% m of the corresponding block copolymers.

The present invention is also related to the preparation of the thermoplastic elastomeric block copolymers of general formulae I and II. Said preparation involves the preparation of elastomeric block copolymers of general formula $B_oD_oB_o'$ (III) or of general formula $(B_o'' E_o)_nX$ (IV), wherein each $B_o$, $B_o'$ and $B_o''$ comprise a linear poly 1,3-butadiene block having a 1,2-linkage content < 5 mol%, as determined via infrared spectroscopy, $D_o$ and $E_o$ are linear elastomeric homo- or copolymers blocks based on one or more conjugated dienes having from 4 to 8 carbon atoms per molecule; the ($\overline{M}_w/\overline{M}_n$) of the blocks $B_o$, $B_oD_o$, $B_oD_oB_o'$, $B_o''$ and $B_o'' E_o$ is $\leq 2$ and X and n have the same meaning as hereinbefore, and the subsequent hydrogenation thereof, so that at least 96% of the initially present olefinic unsaturation is converted.

It is considered to be a primary requirement in order to prepare the block copolymers of general formula I and/or II, that the 1,2-linkage content of the poly 1,3-butadiene endblocks does not exceed the specified value of < 5 mol%, and moreover that the degree of hydrogenation should be as high as possible, i.e. at least 96% of the initially present olefinic unsaturation should be converted.

The nature of blocks $D_o$ and $E_o$ is not critical provided they are substantially linear elastomeric polymer blocks which maintain their elastomeric nature after hydrogenation. Blocks meeting these requirements include polyconjugated diene homo- and copolymer blocks based on conjugated dienes having from 4-8 carbon atoms per molecule. Said copolymer blocks may be copolymers of two or more conjugated dienes as well as copolymers of one or more of such dienes and minor amounts of vinyl aromatic or other suitable monomers, provided their presence in the polymer block does not have an unacceptable influence on the elastomeric nature thereof, either before or after hydrogenation. Preferably the blocks $D_o$ and $E_o$ are elastomeric polybutadiene blocks having a 1,2-linkage content in the range of from 30-70 mol % or polyisoprene blocks having a 3,4-linkage content of less than 20 mol %. when said blocks $D_o$ and $E_o$ are based on mixtures of conjugated dienes, they are preferably butadiene-isoprene copolymer blocks wherein the 1,2-linkage content in the butadiene fraction is in the range of from 30-70 mol % and/or the 3,4-linkage content in the isoprene fraction is less than 20 mol %.

The block copolymers of general formulae III and IV are novel compounds and form another aspect of the present invention. Preferably the blocks $D_o$ and $E_o$ are polyconjugated diene homo- or copolymer blocks based on conjugated dienes having from 4-8 carbon atoms per molecule. Especially preferred are conjugated diene homo- and copolymer blocks $D_o$ and $E_o$ which are selected for the group comprising polybutadiene blocks having a 1,2- linkage content in the range of from 30-70 mol %, polyisoprene blocks having a 3,4-linkage content of less than 20 mol % and butadiene-isoprene copolymers blocks having a 1,2-linkage content in the butadiene fraction in the range of from 30-70 mol % and/or a 3,4-linkage content in the isoprene fraction of less than 20 mol %.

The starting block copolymers of general formulae III and IV are obtainable by anionic solution polymerization processes employing an initiator/cocatalyst system such as has been described e.g. in U.S. patent 4,080,492 or European Patent Application No. 0234512.

The hydrogenation of the block copolymers of general formula III and/or IV may readily be accomplished by procedures known in the art of hydrogenating olefinically unsaturated hydrocarbon polymers, such as catalytic hydrogenation in the presence of catalysts such as nickel on silica, Raney nickel, copper chromite, molybdenum sulfide, platinum oxide, nickel 2-ethylhexanoate/triethylaluminium, organotitanium/alkali metal hydrocarbyl compounds, cobalt 2-ethylhexanoate/triethylaluminium and diimide. A nickel 2-ethylhexanoate/triethylaluminium-based hydrogenation process is preferred in the preparation of the block copolymers of the present invention. The hydrogenation conditions are not critical and may vary widely and will amongst others be determined by the specific nature of the catalyst system employed as well as by the type of polymer to be hydrogenated. The temperature at which the hydrogenation may be conducted will generally be in the range of from 30 to 200°C, while the hydrogen pressure will generally be in the range of from atmospheric pressure to 100 bar. The hydrogenation may conveniently be conducted in an inert solvent or solvent blend and preferably in a hydrocarbon solvent such as n-hexane, cyclohexane, toluene and xylene.

It is preferred that the melting temperature of the blocks B, B′ and B″ of the polymers of the present invention is ≧120°C.

The polymers of the present invention, which are characterized by a high melting point and low content of olefinic unsaturation, may suitably be used in applications which require a high service temperature. Other outlets where the present polymers may advantageously be employed include footwear, adhesives, sealants, coatings and wire cables, as well as in polymer blends e.g. with polyolefins such as polyethylene or polypropylene.

The invention will be further illustrated with the following examples for which the following information is provided:

The polymers employed in Examples I-XII are butadiene-isoprene block copolymers which have been prepared in the presence of a barium-aluminium-lithium catalyst system following the procedure described hereinafter, employing cyclohexane as the solvent, 1,3-butadiene and isoprene as the monomers, and where appropriate diethyl adipate as coupling agent; the polymers in Examples I-III and IX-XII via coupling of butadiene-isoprene (B-I) diblocks with diethyl adipate, and the polymers in Examples IV-VIII - (B-I-B) triblock copolymers - via a full-sequential polymerization.

The polymers employed in the comparative experiments A and B were of the same type as the polymers used in Examples IV-VIII but prepared with the aid of an organolithium initiator system.

## Preparation of B-I-B triblock copolymers

A nitrogen purged 10 l stainless steel reactor equipped with a mechanical stirrer, heating and cooling facilities, a gas inlet, facilities to introduce monomer and a sampling tube, was charged with 7 l of dry cyclohexane and 100 g of 1,3-butadiene. The temperature was raised to 65 °C and under vigorous stirring the required amounts (see Table 1) of barium ethoxide, triethyl-aluminium and n-butyllithium were added in a molar ratio of 1:2.2:2.5. Subsequently the remaining amount of butadiene was added to the reactor at a feed rate as indicated in Table 1. After a substantially complete conversion of the butadiene, 100 g of isoprene were charged into the reactor, which was followed by a gradual addition of the remaining amount of isoprene at a rate as indicated in the Table. After a substantially complete conversion of the isoprene, 100 g of butadiene were charged into the reactor which was followed by a gradual addition of the remaining amount of butadiene at a rate as indicated in Table 1, which Table also includes the total polymerization times. The polymerization was terminated by the addition of 4 ml of methanol.

Upon completion of each polymerization step a sample was taken from the reactor for polymer characterization; the polymer was isolated via precipitation in methanol followed by drying at 10 mbar and 50 °C. Polymer characterization data have also been included in Table 1.

## Preparation of coupled $(B-I)_nX$ block copolymers

The procedure for the preparation of the B-I-B triblock copolymers was repeated with the exception that at the end of isoprene polymerization step, 3 mmol of diethyl adipate were added to the reactor which was followed after about an hour by the addition of 4 ml of methanol.

Polymerization details and polymer characterization data have been included in Table 1.

## Preparation of the polymers for use in comparative experiments A and B

The procedure employed for the preparation of the B-I-B triblock copolymers was repeated with the exception that the barium-aluminium-lithium catalyst system was replaced with a sec-butyllithium initiator system.

Polymerization details and polymer characterization data have been included in Table 1.

The coupling efficiency of the polymers, when appropriate, was determined via gel permeation chromatography (GPC) and expresses the mass percentage of diblock material which has been coupled. Via GPC it was furthermore established that the polymers comprised mixtures of linear triblock polymer, 3-star and 4-star block copolymer and diblock material.

4

The 1,2-linkage content of the polybutadiene blocks and the 3,4-linkage content of the polyisoprene blocks was determined via infrared spectroscopy and $^{13}$C-NMR.

The molecular weight data, i.e. $\overline{M}_n$ (number average molecular weight), $\overline{M}_w$ (weight average molecular weight) and $\overline{M}_w/\overline{M}_n$ (molecular weight distribution) were also determined via GPC.

$T_g$ (glass transition temperature) and $T_m$ (melting temperature) were determined via differential scanning calorimetry, employing a Perkin Elmer DSC-7 at a heating rate of 20°C/min.

The mechanical performance properties were determined following ASTM D-412 and ASTM D-2240.

Examples I-XII

Hydrogenation of butadiene-isoprene block copolymers

1.3 l of a 10% m polymer solution in cyclohexane was pumped into a 2 l autoclave. The autoclave was subsequently pressurized with hydrogen to approximately 10 bar and heated to 70°C. At this temperature the hydrogenation catalyst was added from an attached cylinder, which was immediately followed by adjusting the pressure to 38 bar with hydrogen.

The catalyst had been obtained from a reaction at 40°C for 15 minutes in a nitrogen atmosphere between 17.1 ml of a solution containing 199 mmol triethylaluminium/l cyclohexane and 24.9 ml of a solution containing 77.6 mmol of anhydrous nickel-2-ethyl-hexanoate/l cyclohexane. The degree of hydrogenation was determined via ozone titration. After 98% or more of the olefinic unsaturation had been reacted the autoclave was depressurized and the catalyst deactivated by contacting it with air during the discharging of the polymer cement. The polymer cement was extracted twice at approximately 70°C with approximately 65 ml of a 1% aqueous citric acid solution and subsequently twice with approximately 65 ml water. Finally the polymer was isolated by steam stripping.

Some characteristics of the polymers thus prepared are given in Table 2, which table also includes some performance properties of samples based on these polymers.

Comparative experiments A and B

The procedure as described in Examples I-XII was repeated with the exception that the comparative polymers A and B were employed.

The relevant polymer characteristics as well as some performance data have also been included in Table 2.

EP 0 387 947 B1

## TABLE 1

| Butadiene-isoprene block copolymer used in Example or in comparative experiment | I | II | III | IV | V | VI | VII |
|---|---|---|---|---|---|---|---|
| | - | - | - | - | - | - | - |
| **Initiator (mmol)** | | | | | | | |
| Barium ethoxide | 10 | 10 | 8 | 12 | 10 | 10 | 10 |
| Triethylaluminium | 22 | 22 | 18 | 26 | 22 | 22 | 22 |
| n-Butyllithium | 25 | 25 | 20 | 30 | 25 | 25 | 25 |
| **Monomer (g)** | | | | | | | |
| Butadiene (first step) | 600 | 350 | 300 | 200 | 125 | 250 | 312.5 |
| Isoprene | 400 | 650 | 700 | 600 | 750 | 500 | 375 |
| Butadiene (third step) | | | | 200 | 125 | 250 | 312.5 |
| **Monomer feed rate (g/min)** | | | | | | | |
| Butadiene | 2 | 2 | 15 | 2 | 2 | 2 | 2 |
| Isoprene | 6 | 6 | 6 | 6 | 6 | 6 | 6 |
| **Total polymerization time (h)** | | | | | | | |
| B-block | 6.5 | 4.5 | 4 | 3.5 | 2.5 | 3.5 | 4 |
| B-I-block | 8.5 | 7.5 | 7 | 6 | 5.5 | 6 | 6 |
| B-I-B-block | - | - | - | 9.5 | 8 | 9.5 | 10 |
| **Polymer characteristics** | | | | | | | |
| Polybutadiene content % | 57.7 | 34 | 29 | 41 | 25 | 50 | 62.5 |
| 1,2-linkage content % | 2 | 2 | 1 | 3 | 2 | 2 | 2 |
| 3,4-linkage content % | 12 | 12 | 13 | 12 | 12 | 12 | 12 |
| Coupling efficiency | 75 | 75 | 75 | - | - | - | - |
| $\bar{M}_n$ (B-I-B) x10$^{-3}$ | 104 | 117 | 148 | 91 | 96 | 148 | 158 |
| $\bar{M}_n$ (B-I) x10$^{-3}$ (non-coupled) | 90 | 76 | 90 | - | - | - | - |
| $\bar{M}_w/\bar{M}_n$ | 1.3 | 1.3 | 1.3 | 1.5 | 1.5 | 1.5 | 1.7 |

TABLE 1 (Cont'd)

| Butadiene-isoprene block copolymer used in Example or in comparative experiment | VIII - | IX - | X - | XI - | XII - | A | B |
|---|---|---|---|---|---|---|---|
| **Initiator (mmol)** | | | | | | | |
| Barium ethoxide | 10 | 12 | 12 | 12 | 12 | - | - |
| Triethylaluminium | 22 | 26 | 26 | 26 | 26 | - | - |
| n-Butyllithium | 25 | 30 | 30 | 30 | 30 | 6* | 6* |
| **Monomer (g)** | | | | | | | |
| Butadiene (first step) | 5 | 500 | 600 | 700 | 800 | 275 | 250 |
| Isoprene | 50 | 500 | 400 | 300 | 200 | 450 | 500 |
| Butadiene (third step) | 25 | - | - | - | - | 275 | 250 |
| **Monomer feed rate (g/min)** | | | | | | | |
| Butadiene | 2 | 2.5 | 2.5 | 2.5 | 2.5 | 20 | 20 |
| Isoprene | 6 | 7.5 | 7.5 | 7.5 | 7.5 | 20 | 20 |
| **Total polymerization time (h)** | | | | | | | |
| B-block | 4.5 | 5 | 6 | 6.5 | 7 | 1 | 1 |
| B-I-block | 6.5 | 7.5 | 8 | 8.5 | 9 | 2.5 | 2.5 |
| B-I-B-block | 11 | | | | | 3.5 | 3.5 |
| **Polymer characteristics** | | | | | | | |
| Polybutadiene content % | 75 | 50 | 60 | 70 | 80 | 54 | 52.4 |
| 1,2-linkage content % | 2 | 2 | 2 | 2 | 2 | 8 | 8 |
| 3,4-linkage content % | 12 | 12 | 12 | 12 | 12 | 10 | 10 |
| Coupling efficiency | - | 66 | 58 | 65 | 60 | 75 | 75 |
| $M_n$ (B-I-B) $\times 10^{-3}$ | 187 | - | - | - | - | 230 | 225 |
| $\dot{M}_n$ (B-I) $\times 10^{-3}$ (non-coupled) | - | 94 | 113 | 135 | 134 | - | - |
| $M_w/M_n$ | 1.8 | 1.6 | 1.5 | 1.5 | 1.5 | 1.2 | 1.2 |

\* sec-butyllithium

EP 0 387 947 B1

TABLE 2

| Example | | I | II | III | IV | V | VI | VII |
|---|---|---|---|---|---|---|---|---|
| Comparative experiment | | - | - | - | - | - | - | - |
| Polymer characteristics | | | | | | | | |
| Residual unsaturation % | | <2 | <2 | <2 | <2 | <1 | <1 | <1 |
| $T_g$ °C | | -63 | -62 | -63 | -60 | -59 | -60 | -63 |
| $T_m$ °C | | 121 | 121 | 124 | 120 | 130 | 127 | 127 |
| Mechanical performance properties | | | | | | | | |
| Tensile strength at break | MPa | 17.8 | 6.5 | 3.9 | | 2.1 | 15.0 | 24.9 |
| Modulus 300 | MPa | 6.5 | 3.3 | 2.2 | | 1.8 | 4.7 | 6.7 |
| Modulus 500 | MPa | 8.7 | 4.4 | 2.8 | | 1.9 | 5.6 | 8.0 |
| Elongation at break | % | 900 | 1700 | 1025 | | >2000 | 1170 | 900 |
| Shore A Hardness | | 88 | 40 | 55 | 60 | 50 | 78 | 89 |

EP 0 387 947 B1

TABLE 2 (Cont'd)

| Example | | VIII | IX | X | XI | XII | - | - |
|---|---|---|---|---|---|---|---|---|
| Comparative experiment | | - | - | - | - | - | A | B |
| **Polymer characteristics** | | | | | | | | |
| Residual unsaturation % | | <1 | <1 | <1 | <1 | <1 | <2 | <2 |
| $T_g$ °C | | -65 | -61 | -62 | -64 | -66 | -56 | -56 |
| $T_m$ °C | | 128 | 130 | 127 | 128 | 128 | 104 | 104 |
| Mechanical performance properties | | | | | | | | |
| Tensile strength at break | MPa | 23.3 | 18.5 | 25.0 | 23.0 | 32.1 | 9.3 | 16.6 |
| Modulus 300 | MPa | 7.7 | 6.0 | 6.6 | 8.7 | 10.0 | 4.3 | 6.0 |
| Modulus 500 | MPa | 10.0 | 7.5 | 8.8 | 12.5 | 15.9 | 5.9 | 10.0 |
| Elongation at break | % | 745 | 800 | 775 | 670 | 615 | 900 | 710 |
| Shore A Hardness | | 92 | 78 | 86 | 92 | 94 | 70 | 82 |

**Claims**

**Claims for the following Contracting States : BE, DE, FR, GB, IT, NL**

1. Thermoplastic elastomeric block copolymers of general formula BDB' (I) or of general formula $(B''E)_nX$ (II), wherein each of B, B' and B'' comprises a linear polyethylene block obtainable by hydrogenating at least 96% of the olefinic unsaturation initially present in a poly(1,3-butadiene)block having a 1,2-linkage content of less than 5 mol%, said polyethylene block having a melting temperature $\geq$ 110 °C, as determined via differential scanning calorimetry; D and E are linear elastomeric blocks based on one or more conjugated dienes having from 4 to 8 carbon atoms per molecule, obtainable by hydrogenating at least 96% of the olefinic unsaturation initially present in said elastomeric blocks; the molecular weight distribution $(\overline{M}_w/\overline{M}_n)$ of B, BD, BDB', B'' and B''E is $\leq$ 2; X is a terminal coupling agent-based entity and n is an integer $\geq$ 2.

2. Block polymers as claimed in claim 1, wherein the polymer blocks B, B' and B'' have a number average molecular weight $(\overline{M}_n)$ in the range of from 5,000 to 250,000; the $\overline{M}_n$ of the polymer blocks D is in the range of from 25,000 to 750,000; the $\overline{M}_n$ of the polymer blocks E is in the range of from 10,000 to 400,000; and the endblocks comprise from 10 to 90% m of the corresponding block copolymer.

3. Block copolymer as claimed in claim 2, wherein the $\overline{M}_n$ of the polymer blocks B, B' and B'' is in the range of from 10,000 to 100,000; block D has a $\overline{M}_n$ in the range from 40,000 to 500,000; block E has a $\overline{M}_n$ in the range from 20,000 to 250,000, and the endblocks comprise from 20 to 80% m of the corresponding block copolymers.

4. Block copolymers as claimed in any one of claims 1-3, wherein blocks B, B' and B'' have a melting temperature of $\geq$ 120 °C.

5. A process for the preparation of thermoplastic elastomeric block copolymers as claimed in any one of claims 1-4, which comprises the preparation of elastomeric block copolymers of general formula $B_oD_oB'_o$ (III) or of general formula $(B''_o E_o)_nX$ (IV), wherein each of blocks $B_o$, $B'_o$ and $B''_o$ comprises a linear 1,3 polybutadiene block having a 1,2-linkage content < 5 mol %; $D_o$ and $E_o$ are linear, elastomeric homo-or copolymer blocks based on one or more conjugated dienes having from 4 to 8 carbon atoms per molecule; the $\overline{M}_w/\overline{M}_n$ of the $B_o$, $B_oD_o,B_oD_oB'_o$, $B''_o$ and $B''_o E_o$ is $\leq$ 2; and X and n have the same meaning as specified in claim 1, and the subsequent hydrogenation thereof, so that at least 96% of the initially present olefinic unsaturation is converted.

6. A process as claimed in claim 5, wherein the blocks $D_o$ and $E_o$ are poly(conjugated diene) homo- or copolymer blocks based on conjugated dienes having from 4-8 carbon atoms per molecule.

7. A process as claimed in claim 6, wherein the blocks $D_o$ and $E_o$ are selected from the group comprising polybutadiene blocks having a 1,2-linkage content in the range of from 30-70 mol %, polyisoprene blocks having a 3,4-linkage content of less than 20 mol % and butadiene-isoprene copolymers blocks having a 1,2-linkage content in the butadiene fraction in the range of from 30-70 mol % and/or a 3,4-linkage content in the isoprene fraction of less than 20 mol %.

8. A process as claimed in any one of claims 5-7, wherein the hydrogenation is conducted at a temperature in the range of from 30 to 200 °C and a pressure in the range of from atmospheric pressure to 100 bar.

9. A process as claimed in any one of claims 5-8, wherein the hydrogenation is conducted in an inert solvent.

10. A process as claimed in claim 9, wherein the solvent is a hydrocarbon solvent.

11. A process as claimed in any one of claims 5-10, wherein the hydrogenation is a nickel octoate/triethylaluminium based hydrogenation process.

12. Elastomeric block copolymers of general formula $B_oD_oB'_o$ (III) or of general formula $(B''_o E_o)_nX$ (IV), wherein each $B_o$, $B'_o$ and $B''_o$ comprise a linear poly 1,3-butadiene block having a 1,2-linkage content < 5 mol %, as determined via infrared spectroscopy, $D_o$ and $E_o$ are linear elastomeric homo- or copolymers blocks; the $\overline{M_w}/\overline{M_n}$ of the blocks $B_o$, $B_oD_o$, $B_oD_oB_o'$, $B_o''$ and $B_o''E_o$ is $\leq 2$ and X is a terminal coupling agent-based entity and n is an integer $\geq 2$.

13. Block copolymers as claimed in claim 12, wherein the blocks $D_o$ and $E_o$ are poly(conjugated diene) homo- or copolymer blocks based on conjugated dienes having from 4-8 carbon atoms per molecule.

14. Block copolymers as claimed in claim 13, wherein the blocks $D_o$ and $E_o$ are selected from the group consisting of polybutadiene blocks having a 1,2-linkage content in the range of from 30-70 mol %, polyisoprene blocks having a 3,4-linkage content of less than 20 mol % and butadiene-isoprene copolymers blocks having a 1,2-linkage content in the butadiene fraction in the range of from 30-70 mol % and/or a 3,4-linkage content in the isoprene fraction of less than 20 mol %.

**Claims for the following Contracting State : ES**

1. A process for the preparation of thermoplastic elastomeric block copolymers of general formula BDB' (I) or of general formula $(B''E)_nX$, II wherein each of B, B' and B'' comprises a linear, polyethylene block, having a melting temperature $\geq$ 110 °C, as determined via differential scanning calorimetry; D and E are linear elastomeric polymer blocks, the molecular weight distribution $(\overline{M_w}/\overline{M_n})$ of B, BD, BDB' , B'' and B''E is $\leq$ 2; X is a terminal coupling agent based entity and n is an integer $\geq$ 2 which process comprises the preparation of elastomeric block copolymers of general formula $B_oD_oB_o'$ (III) or of general formula $(B_o'' E_o)_nX(IV)$, wherein each of blocks $B_o$, $B_o'$ and $B_o''$ comprises a linear 1,3-polybutadiene block having a 1,2-linkage content < 5 mol %; $D_o$ and $E_o$ are linear, elastomeric homo-or copolymer blocks based on one or more conjugated dienes having from 4 to 8 carbon atoms per molecule; the $(\overline{M_w}/\overline{M_n})$ of $B_o$, $B_oD_o$, $B_oD_oB_o'$ , $B_o''$ and $B_o''E_o$ is $\leq$ 2; and X and n have the same meaning as hereinbefore, and the subsequent hydrogenation thereof so that at least 96% of the initially present olefinic unsaturation has been converted.

2. A process as claimed in claim 1, wherein the blocks $D_o$ and $E_o$ are poly(conjugated diene) homo- or copolymer blocks based on conjugated dienes having from 4-8 carbon atoms per molecule.

3. A process as claimed in claim 2, wherein the blocks $D_o$ and $E_o$ are selected from the group comprising polybutadiene blocks having a 1,2-linkage content in the range of from 30-70 mol %, polyisoprene blocks having a 3,4-linkage content of less than 20 mol % and butadiene-isoprene copolymers blocks having a 1,2-linkage content in the butadiene fraction in the range of from 30-70 mol % and/or a 3,4-linkage content in the isoprene fraction of less than 20 mol %.

4. A process as claimed in any one of claims 1-3, wherein the hydrogenation is conducted at a temperature in the range of from 30 to 200 °C and a pressure in the range of from atmospheric pressure to 100 bar.

5. A process as claimed in any one of claims 1-4, wherein the hydrogenation is conducted in an inert solvent.

6. A process as claimed in claim 5, wherein the solvent is a hydrocarbon solvent.

7. A process as claimed in any one of claims 1-6, wherein the hydrogenation is a nickel octoate/triethylaluminium based hydrogenation process.

8. A process for the preparation of block copolymers of general formula III as defined in claim 1, which process comprises anionic solution polymerization.

9. A process for the preparation of block copolymers of general formula IV as defined in claim 1, which process comprises anionic solution polymerization.

# EP 0 387 947 B1

**Patentansprüche**
**Patentansprüche für folgende Vertragsstaaten : BE, DE, FR, GB, IT, NL**

1. Thermoplastische elastomere Blockcopolymere der allgemeinen Formel BDB' (I) oder der allgemeinen Formel $(B''E)_nX$ (II), in welchen B, B' und B'' jeweils einen linearen Polyethylenblock umfassen, der durch Hydrieren von mindestens 96% der anfänglich in einem Poly (1,3-butadien)block mit einem Gehalt an 1,2-Bindungen von weniger als 5 Molprozent vorliegenden olefinischen Nicht-Sättigung erhalten werden kann, wobei der genannte Polyethylenblock eine Schmelztemperatur von $\geq 110°C$ aufweist, wie mittels Differentialrasterkalorimetrie festgestellt werden kann; D und E lineare elastomere Blöcke auf der Basis von einem oder mehreren konjugierten Dien(en) mit 4 bis 8 Kohlenstoffatomen im Molekül sind, die durch Hydrieren von mindestens 96% der anfänglich in den genannten elastomeren Blöcken vorliegenden olefinischen Nicht-Sättigung erhalten werden können;wobei die Molekularge-wichtsverteilung $(\overline{M}_w/\overline{M}_n)$ von B, BD, BDB', B'' und B''E $\leq 2$ ist; X eine endständige Einheit auf der Basis eines Kupplungsmittel ist und n eine ganze Zahl von $\geq 2$ ist.

2. Blockpolymere, wie in Anspruch 1 beansprucht, in welchen die Polymerblöcke B,B' und B'' ein durchschnittliches Molekulargewicht $(\overline{M}_n)$ (Zahlenmittel) im Bereich von 5000 bis 250000 aufweisen; das $\overline{M}_n$ der Polymerblöcke D im Bereich von 25000 bis 750000 liegt; das $\overline{M}_n$ der Polymerblöcke E im Bereich von 10000 bis 400000 liegt; und die Endblöcke 10 bis 90% des entsprechenden Blockcopolymers umfassen.

3. Blockcopolymer, wie in Anspruch 2 beansprucht, in welchem das $\overline{M}_n$ der Polymerblöcke B, B' und B'' im Bereich von 10000 bis 100000 liegt; Block D ein $\overline{M}_n$ im Bereich von 40000 bis 500000 hat; Block E ein $\overline{M}_n$ im Bereich von 20000 bis 250000 aufweist, und die Endblöcke 20 bis 80 % m des entsprechenden Blockcopolymers umfassen.

4. Blockcopolymere, wie in einem der Ansprüche 1 bis 3 beansprucht, in welchen die Blöcke B, B' und B'' eine Schmelztemperatur von $\geq 120°C$ aufweisen.

5. Ein Verfahren zur Herstellung der thermoplastischen elastomeren Blockcopolymere, wie in einem der Ansprüche 1 bis 4 beansprucht, welches die Herstellung von elastomeren Blockcopolymeren der allgemeinen Formel $B_oD_oB'_o$ (III) oder der allgemeinen Formel $(B''_oE_o)_nX$ (IV), umfaßt, wobei jeder der Blöcke $B_o$, $B'_o$ und $B''_o$ einen linearen 1,3-Polybutadienblock mit einem Gehalt an 1,2-Bindungen von < 5 Molprozent umfaßt; $D_o$ und $E_o$ lineare, elastomere Homo- oder Copolymerblöcke auf der Basis von einem oder mehreren konjugierten Dien(en) mit 4 bis 8 Kohlenstoffatomen im Molekül sind; der Wert von $\overline{M}_w/\overline{M}_n$ von $B_o$, $B_oD_o$, $B_oD_oB'_o$,$B''_o$ und $B''_oE_o$ $\leq 2$ ist ; und X und n die gleiche Bedeutung haben, wie in Anspruch 1 beansprucht, und die anschließende Hydrierung derselben umfaßt, so daß mindestens 96% der anfänglich vorhandenen olefinischen Nicht-Sättigung umgewandelt werden.

6. Ein Verfahren, wie in Anspruch 5 beansprucht, in welchem die Blöcke $D_o$ und $E_o$ poly(konjugierte Dien-) Homo- oder Copolymerblöcke auf der Basis von konjugierten Dienen mit 4 bis 8 Kohlenstoffatomen im Molekül sind.

7. Ein Verfahren, wie in Anspruch 6 beansprucht, in welchem die Blöcke $D_o$ und $E_o$ ausgewählt sind aus der Gruppe, umfassend Polybutadienblöcke mit einem Gehalt an 1,2-Bindungen im Bereich von 30 bis 70 Molprozent, Polyisoprenblöcke mit einem Gehalt an 3,4-Bindungen von weniger als 20 Molprozent und Butadien-Isoprencopolymerblöcke mit einem Gehalt an 1,2-Bindungen in der Butadienfraktion im Bereich von 30 bis 70 Molprozent und/oder einem Gehalt an 3,4-Bindungen in der Isoprenfraktion von weniger als 20 Molprozent.

8. Ein Verfahren, wie in einem der Ansprüche 5 bis 7 beansprucht, in welchem die Hydrierung bei einer Temperatur im Bereich von 30 bis 200°C und einem Druck im Bereich von atmosphärischem Druck bis 100 Bar durchgeführt wird.

9. Ein Verfahren, wie in einem der Ansprüche 5 bis 8 beansprucht, in welchem die Hydrierung in einem inerten Lösungsmittel durchgeführt wird.

12

**10.** Ein Verfahren, wie in Anspruch 9 beansprucht, in welchem das Lösungsmittel ein Kohlenwasserstofflösungsmittel ist.

**11.** Ein Verfahren, wie in einem der Ansprüche 5 bis 10 beansprucht, in welchem die Hydrierung ein Hydrier-Verfahren auf der Basis von Nickeloctoat/Triethylaluminium ist.

**12.** Elastomere Blockcopolymere der allgemeinen Formel $B_oD_oB'_o$ (III) oder der allgemeinen Formel $(B''_oE_o)_nX$ (IV), in welchen jeweils $B_o$, $B'_o$ und $B''_o$ einen linearen Poly-1,3-butadienblock mit einem Gehalt an 1,2-Bindungen von < 5 Molprozent enthalten, wie mittels Infrarotspektroskopie festgestellt werden kann, Do und $E_o$ lineare elastomere Homo- oder Copolymerblöcke sind; der Wert von $\overline{M_w}/\overline{M_n}$ der Blöcke $B_o$, $B_oD_o$, $B_oD_oB'_o$, $B''_o$ und $B''_oE_o \leq 2$ ist, X eine endständige Einheit auf der Basis eines Kupplungsmittels ist und n eine ganze Zahl $\geq 2$ ist.

**13.** Blockcopolymere, wie in Anspruch 12 beansprucht, in welchen die Blöcke $D_o$ und $E_o$ poly(konjugierte Dien-)Homo- oder Copolymerblöcke auf der Basis von konjugierten Dienen mit 4 bis 8 Kohlenstoffatomen im Molekül sind.

**14.** Blockcopolymere, wie in Anspruch 13 beansprucht, in welchen die Blöcke $D_o$ und $E_o$ ausgewählt sind aus der Gruppe, bestehend aus Polybutadienblöcken mit einem Gehalt an 1,2 -Bindungen im Bereich von 30 bis 70 Molprozent, Polyisoprenblöcken mit einem Gehalt an 3,4-Bindungen von weniger als 20 Molprozent und Butadien-Isoprencopolymerblöcken mit einem Gehalt an 1,2-Bindungen in der Butadienfraktion im Bereich von 30 bis 70 Molprozent und/oder einem Gehalt an 3,4-Bindungen in der Isoprenfraktion von weniger als 20 Molprozent.

**Patentansprüche für folgenden Vertragsstaat : ES**

**1.** Ein Verfahren zur Herstellung von thermoplastischen elastomeren Blockcopolymeren der allgemeinen Formel BDB'(I) oder der allgemeinen Formel $(B''E)_nX$, in welchen Formeln B, B' und B'' jeweils einen im wesentlichen linearen, im wesentlichen reinen Polyethylenblock umfassen, der eine Schmelztemperatur von $\geq 100°C$ aufweist, wie durch Differentialrasterkalorimetrie festgestellt werden kann; D und E im wesentlichen lineare elastomere Polymerblöcke sind, die im wesentlichen frei sind von olefinischer Nicht-Sättigung; die Molekulargewichtsverteilung $(\overline{M_w}/\overline{M_n})$ von B, BD, BDB', B'' und B''E $\leq 2$ ist; X eine endständige Einheit auf der Basis eines Kupplungsmittels ist, und n eine ganze Zahl $\geq 2$ ist, welches Verfahren die Herstellung von elastomeren Blockcopolymeren der allgemeinen Formel $B_oD_oB'_o$ (III) oder der allgemeinen Formel $(B_o''E_o)_nX(IV)$ , wobei jeder der Blöcke $B_o$, $B'_o$ und $B_o''$ einen im wesentlichen linearen Polybutadienblock mit einem Gehalt an 1,2-Bindung von < 5 Molprozent aufweist; $D_o$ und $E_o$ im wesentlichen lineare, elastomere Homo- oder Copolymerblöcke sind; der Wert für $(\overline{M_w}/\overline{M_n})$ von $B_o$, $B_oD_o$, $B_oD_oB'_o$, $B''_o$ und $B''_oE_o \leq 2$ ist; und X und n die gleiche Bedeutung haben , wie oben erwähnt, und die anschließende im wesentlichen vollständige Hydrierung derselben umfaßt.

**2.** Ein Verfahren, wie in Anspruch 1 beansprucht, in welchem die Blöcke $D_o$ und $E_o$ konjugierte Dien-Homo- oder Copolymerblöcke auf der Basis von konjugierten Dienen mit 4 bis 8 Kohlenstoffatomen im Molekul sind.

**3.** Ein Verfahren, wie in Anspruch 2 beansprucht, in welchem die Blöcke $D_o$ und $E_o$ ausgewählt sind aus der Gruppe, umfassend Polybutadienblöcke mit einem Gehalt an 1,2-Bindungen im Bereich von 30 bis 70 Molprozent, Polyisoprenblöcke mit einem Gehalt an 3,4-Bindungen von weniger als 20 Molprozent und Butadien-Isoprencopolymerblöcke mit einem Gehalt an 1,2-Bindungen in der Butadienfraktion im Bereich von 30 bis 70 Molprozent und/oder einem Gehalt an 3,4-Bindungen in der Isoprenfraktion von weniger als 20 Molprozent.

**4.** Ein Verfahren, wie in einem der Ansprüche 1 bis 3 beansprucht, in welchem die Hydrierung bei einer Temperatur im Bereich von 30 bis 200°C und einem Druck im Bereich von atmosphärischem Druck bis 100 Bar durchgeführt wird.

**5.** Ein Verfahren, wie in einem der Ansprüche 1 bis 4 beansprucht, in welchem die Hydrierung in einem inerten Lösungsmittel durchgeführt wird.

EP 0 387 947 B1

**6.** Ein Verfahren, wie in Anspruch 5 beansprucht, in welchem das Lösungsmittel ein Kohlenwasserstofflösungsmittel ist.

**7.** Ein Verfahren, wie in einem der Ansprüche 1 bis 6 beansprucht, in welchem die Hydrierung ein Hydrier-Verfahren auf der Basis von Nickeloctoat/Triethylaluminium ist.

**8.** Ein Verfahren zur Herstellung von Blockcopolymeren der allgemeinen Formel III, wie in Anspruch 1 definiert, welches Verfahren eine anionische Lösungspolymerisation umfaßt.

**9.** Ein Verfahren zur Herstellung von Blockcopolymeren der allgemeinen Formel IV, wie in Anspruch 1 definiert, welches Verfahren eine anionische Lösungspolymerisation umfaßt.

**Revendications**

**Revendications pour les Etats contractants suivants : BE, DE, FR, GB, IT, NL**

**1.** Copolymères séquencés élastomères thermoplastiques de formule générale BDB' (I) ou de formule générale $(B''E)_nX$ (II), dans lesquelles chacun de B, B' et B'' comprend un bloc de polyéthylène linéaire pouvant être obtenu en hydrogénant au moins 96 % de l'insaturation oléfinique initialement présente dans un bloc de poly(1,3-butadiène) ayant une teneur en liaison 1,2 de moins de 5 moles %, ce bloc de polyéthylène ayant une température de fusion supérieure ou égale à 110°C, comme déterminé par analyse calorimétrique différentielle à compensation de puissance ; D et E sont des blocs élastomères linéaires à base d'un ou plusieurs diènes conjugués ayant de 4 à 8 atomes de carbone, pouvant être obtenus en hydrogénant au moins 96 % de l'insaturation oléfinique initialement présente dans lesdits blocs élastomères ; la distribution des poids moléculaires $(\overline{M_w}/\overline{M_n})$ de B, BD, BDB', B'' et B''E est inférieure ou égale à 2 ; X est une entité à base d'agent de couplage terminal et n est un nombre entier supérieur ou égal à 2.

**2.** Copolymères élastomères selon la revendication 1, dans lesquels les blocs de polymères B, B' et B'' ont un poids moléculaire moyen en nombre $(\overline{M_n})$ compris entre 5 000 et 250 000 ; le $\overline{M_n}$ des blocs de polymère D est compris entre 25 000 et 750 000 : le $\overline{M_n}$ des blocs de polymère E est compris entre 10 000 et 400 000 ; et les blocs terminaux constituent de 10 à 90 moles % du copolymère séquencé correspondant.

**3.** Copolymère séquencé selon la revendication 2, dans lequel le $\overline{M_n}$ des blocs de polymères B, B' et B'' est compris entre 10 000 et 100 000 ; le bloc D a un $\overline{M_n}$ compris entre 40 000 et 500 000 : le bloc E a un $\overline{M_n}$ compris entre 20 000 et 250 000 et les blocs terminaux constituent de 20 à 80 moles % des copolymères séquencés correspondants.

**4.** Copolymères séquencés selon l'une quelconque des revendications 1-3, dans lesquels les blocs B, B' et B'' ont une température de fusion supérieure ou égale à 120°C.

**5.** Un procédé pour la préparation de copolymères séquencés élastomères thermoplastiques tels que revendiqués dans l'une quelconque des revendications 1-4, qui comprend la préparation de copolymères séquencés élastomères de formule générale $B_oD_oB_o'$ (III) ou de formule générale $(B_o'' E_o)_nX$ (IV), dans lesquels chacun des blocs $B_o$, $B_o'$ et $B_o''$ comprend un bloc de poly(1,3-butadiène) linéaire ayant une teneur en liaison 1,2 de moins de 5 moles % ; $D_o$ et $E_o$ sont des blocs d'homopolymères ou de copolymères élastomères linéaires à base d'un ou plusieurs diènes conjugués ayant de 4 à 8 atomes de carbone par molécule : le rapport $\overline{M_w}/\overline{M_n}$ des blocs $B_o$, $B_oD_o$, $B_oD_oB_o'$ , $B_o''$ et $B_o''$ $E_o$ est inférieur ou égal à 2 ; et X et n ont la même signification que spécifiée dans la revendication 1, et leur hydrogénation ultérieure, de façon qu'au moins 96 % de l'insaturation oléfinique initialement présente soit transformée.

**6.** Un procédé selon la revendication 5, dans lequel les blocs $D_o$ et $E_o$ sont des blocs d'homopolymères ou de copolymères de poly(diène conjugué) à base de diènes conjugués ayant de 4 à 8 atomes de carbone par molécule.

**7.** Un procédé selon la revendication 6, dans lequel les blocs $D_o$ et $E_o$ sont choisis dans le groupe comprenant les blocs de polybutadiène ayant une teneur en liaison 1,2 comprise entre 30 et 70 moles

14

%, les blocs de polyisoprène ayant une teneur en liaison 3,4 de moins de 20 moles % et les blocs de copolymères butadièneisoprène ayant une teneur en liaison 1,2 dans la fraction butadiène comprise entre 30 et 70 moles % et/ou une teneur en liaison 3,4 dans la fraction isoprène de moins de 20 moles %.

8. Un procédé selon l'une quelconque des revendications 5-7, dans lequel l'hydrogénation est conduite à une température comprise entre 30 et 200°C et une pression comprise entre la pression atmosphérique et 100 bars.

9. Un procédé selon l'une quelconque des revendications 5-8, dans lequel l'hydrogénation est conduite dans un solvant inerte.

10. Un procédé selon la revendication 9, dans lequel le solvant est un solvant hydrocarboné.

11. Un procédé selon l'une quelconque des revendications 5-10, dans lequel l'hydrogénation est un procédé d'hydrogénation à base d'octanoate de nickel/triéthylaluminium.

12. Copolymères séquencés élastomères de formule générale $B_oD_oB_o'$ (III) ou de formule générale $(B_o'' E_o)_nX$ (IV) où chacun de $B_o$, $B'_o$ et $B_o''$ comprend un bloc de poly(1,3-butadiène) linéaire ayant une teneur en liaison 1,2 inférieure à 5 moles %, comme déterminé par spectroscopie infrarouge, $D_o$ et $E_o$ sont des blocs d'homopolymères ou de copolymères élastomères linéaires ; le rapport $\overline{M}_w/\overline{M}_n$ des blocs $B_o$, $B_oD_o$, $B_oD_oB_o'$, $B_o''$ et $B_o''$ $E_o$ est inférieur ou égal à 2, et X est une entité à base d'agent de couplage terminal et n est un nombre entier supérieur ou égal à 2.

13. Copolymères séquencés selon la revendication 12, dans lesquels les blocs $D_o$ et $E_o$ sont des blocs d'homopolymères ou de copolymères de poly(diène conjugué) à base de diènes conjugués ayant de 4 à 8 atomes de carbone par molécule.

14. Copolymères séquencés selon la revendication 13, dans lesquels les blocs $D_o$ et $E_o$ sont choisis dans le groupe constitué par les blocs de polybutadiène ayant une teneur en liaison 1,2 comprise entre 30 et 70 moles %, les blocs de polyisoprène ayant une teneur en liaison 3,4 de moins de 20 moles % et les blocs de copolymères butadiène-isoprène ayant une teneur en liaison 1,2 dans la fraction butadiène comprise entre 30 et 70 moles % et/ou une teneur en liaison 3,4 dans la fraction isoprène de moins de 20 moles %.

**Revendications pour l'Etat contractant suivant : ES**

1. Un procédé pour la préparation de copolymères séquencés élastomères thermoplastiques de formule générale BDB' (I) ou de formule générale $(B''E)_nX$, où chacun de B, B' et B'' comprend un bloc de polyéthylène substantiellement linéaire, substantiellement pur, ayant une température de fusion supérieure ou égale à 110°C, comme déterminé par analyse calorimétrique différentielle à compensation de puissance ; D et E sont des blocs de polymères élastomères substantiellement linéaires, exempts d'insaturation oléfinique ; la distribution des poids moléculaires $(\overline{M}_w/\overline{M}_n)$ de B, BD, BDB', B'' et B''E est inférieure ou égale à 2 ; X est une entité à base d'agent de couplage terminal et n est un nombre entier supérieur ou égal à 2, lequel procédé comprend la préparation de copolymères séquencés élastomères de formule générale $B_oD_oB_o'$ (III) ou de formule générale $(B_o'' E_o)_nX$ (IV), où chacun des blocs $B_o$, $B_o'$ et $B_o''$ comprend un bloc de polybutadiène substantiellement linéaire ayant une teneur en liaison 1,2 inférieure à 5 moles % ; $D_o$ et $E_o$ sont des blocs d'homopolymères élastomères substantiellement linéaires ; la distribution $(\overline{M}_w/\overline{M}_n)$ des blocs $B_o$, $B_oD_o$, $B_oD_oB_o'$, $B_o''$ et $B_o''$ $E_o$ est inférieure ou égale à 2 : et X et n ont la même signification que ci-dessus, et leur hydrogénation ultérieure substantiellement complète.

2. Un procédé selon la revendication 1, dans lequel les blocs $D_o$ et $E_o$ sont des blocs d'homopolymères ou de copolymères de diènes conjugués à base de diènes conjugués ayant de 4 à 8 atomes de carbone par molécule.

3. Un procédé selon la revendication 2, dans lequel les blocs $D_o$ et $E_o$ sont choisis dans le groupe comprenant les blocs de polybutadiène ayant une teneur en liaison 1,4 comprise entre 30 et 70 moles %, les blocs de polyisoprène ayant une teneur en liaison 3,4 de moins de 20 moles % et les blocs de copolymères butadièneisoprène ayant une teneur en liaison 1,2 dans la fraction butadiène comprise entre 30 et 70 moles % et/ou une teneur en liaison 3,4 dans la fraction isoprène de moins de 20 moles %.

4. Un procédé selon l'une quelconque des revendications 1-3, dans lequel l'hydrogénation est conduite à une température comprise entre 30 et 200°C et une pression comprise entre la pression atmosphérique et 100 bars.

5. Un procédé selon l'une quelconque des revendications 1-4, dans lequel l'hydrogénation est conduite dans un solvant inerte.

6. Un procédé selon la revendication 5, dans lequel le solvant est un solvant hydrocarboné.

7. Un procédé selon l'une quelconque des revendications 1-6, dans lequel l'hydrogénation est un procédé d'hydrogénation à base d'octanoate de nickel/triéthylaluminium.

8. Un procédé pour la préparation de copolymères séquencés de formule générale III telle que définie dans la revendication 1, qui comprend une polymérisation anionique en solution.

9. Un procédé pour la préparation de copolymères séquencés de formule générale IV telle que définie dans la revendication 1, qui comprend une polymérisation anionique en solution.